# FASCICULE DE BREVET EUROPEEN

(11) **EP 1 838 787 B1**
(45) Date de publication et mention de la délivrance du brevet: **09.04.2008**
(21) Numéro de dépôt: 05821688.8
(22) Date de dépôt: 22.12.2005
(51) Int. Cl.: C08L 95/00

(54) **MASTIC BITUMINEUX CHARGE ET A BASE DE RESINE THERMOPLASTIQUE**
GEFÜLLTER BITUMENMASTIX AUF BASIS VON THERMOPLASTISCHEM HARZ
CHARGED THERMOPLASTIC RESIN BASED BITUMINOUS MASTIC

(30) Priorité: 23.12.2004 FR 0453201
(43) Date de publication de la demande: 03.10.2007
(73) Titulaire: Total France, 92800 Puteaux (FR)
(72) Inventeur: LAPALU, Laurence, F-69100 Villeurbanne (FR); VINCENT, Régis, F-69520 Grigny (FR)
(74) Mandataire: Cabinet Plasseraud
(86) Numéro de dépôt international: PCT/EP2005/057131
(87) Numéro de publication internationale: WO 2006/067223

(56) Documents cités:
- EP-A- 0 299 499
- GB-A- 2 144 131
- US-B1- 6 174 939

## Description

La présente invention est relative aux mastics bitumineux chargés et utilisés dans le domaine des applications industrielles, notamment dans la fabrication de revêtements intérieurs ou extérieurs, employés pour l'étanchéité et/ou l'amortissement de vibrations et/ou l'isolation thermique et/ou phonique et/ou la protection contre le feu (ignifugation).

De tels revêtements à base de mastic bitumineux sont notamment mis en oeuvre dans le bâtiment (extérieur/intérieur), dans les carrosseries d'automobiles ou dans les machines de production de froid (réfrigérateurs, congélateurs, climatiseurs, etc.).

Plus précisément, l'invention concerne les applications aux fins susvisées de mastics bitumineux comportant généralement, d'une part, au moins un liant bitumineux, à savoir par exemple une suspension colloïdale de molécules d'asphaltènes dans une phase huileuse, au moins un polymère et, d'autre part, au moins une charge de préférence pulvérulente.

Outre les applications desdits mastics bitumineux, l'invention inclut également les procédés de préparation desdits mastics bitumineux

S'agissant plus spécialement des applications industrielles dans le bâtiment, sont notamment concernés :
- les revêtements intérieurs de bâtiments: revêtements de sol (tapis, moquettes sous formes de bandes ou de dalles, chapes intérieures, parquets-par exemple flottants-) ou revêtements muraux,
- et les revêtements extérieurs de bâtiments: membranes d'étanchéité (ou chapes) pour les toits, les terrasses, les façades, les murs etc.

Pour les membranes d'étanchéité, on en distingue deux types disponibles sur le marché.

Le premier type comprend les membranes d'étanchéité appliquées par chauffage [ex: à flamme nue ou à l'aide de résistance(s)], de façon à ramollir, voire liquéfier, le bitume et ainsi assurer la liaison de la membrane avec le support extérieur (souvent en béton) pour les toitures, terrasses et/ou façades.

Le deuxième type de membranes d'étanchéité comprend les membranes d'étanchéité auto-adhésives, appliquées par simple pression sur les supports extérieurs de bâtiments (toitures, terrasses, façades).

Les mastics bitumineux employés dans ces 2 types de membranes d'étanchéité comprennent du bitume (ou liant bitumineux) *stricto sensu,* des charges plus ou moins fines, et éventuellement un ou plusieurs (co)polymères.

Pour préparer ces membranes d'étanchéité et/ou des éléments de revêtements de sols (tapis, moquettes en dalles ou en bandes enroulées), les mastics bitumineux sont appliqués sur un support fibreux ou non fibreux, tissé ou non tissé; par exemple: un mat ou un voile de fibres inorganiques telles que des fibres de verre, un voile de fibres organiques de (co)polymère(s) synthétique(s) telles que les fibres de polyester, ou un voile comprenant un mélange de fibres organiques et inorganiques. Les techniques usuellement employées sont des techniques d'enduction de surface et/ou d'imprégnation dans la masse du support fibreux tissé ou non.

A ce jour, les membranes d'étanchéité extérieures disponibles sur le marché, par exemple sous forme de bandes enroulées, sont appliquées sur les surfaces à traiter, lorsque les conditions extérieures sont suffisamment clémentes pour permettre la pose.

La pose consiste à faire adhérer les bandes de membranes d'étanchéité par chauffage, de manière à ramollir la matrice et/ou la surface de la membrane faite de mastic bitumineux. Après avoir été ainsi collées sur le sol de la surface à traiter, les bandes de membranes d'étanchéité sont soudées entre elles.

Toutefois, lors de l'application après chauffage et/ou en été, donc dans des conditions de températures relativement élevées, par exemple supérieure à 40°C, la membrane d'étanchéité collée est ou devient molle, et donc déformable de sorte qu'elle est sensible à la pression, et en particulier elle est susceptible d'être marquée par les pas des opérateurs ou des poseurs se déplaçant et/ou s'appuyant sur la surface revêtue de la membrane. Ces actions ont pour effet de déformer la membrane et il serait donc souhaitable pour les utilisateurs de supprimer cet inconvénient, sans pour autant compliquer la pose, ni augmenter la température d'adhésivité au risque de détériorer le matériau.

Pour résoudre ce problème technique, il conviendrait de rendre le mastic bitumineux davantage rigide de sorte que lors du refroidissement de la membrane après avoir été chauffée pour être posée et collée sur le support, elle devienne résistante notamment à la déformation sous charge dynamique et également statique dans les conditions de température ambiante régnant lors de la pose et lors de période d'élévation de températures notamment supérieure à 40°C.

Cette rigidité cependant ne doit pas être acquise aux dépens des propriétés du mastic bitumineux que l'on souhaite conserver à température ambiante, voire dans des conditions de basses températures (-20°C et 0°C). Il est impératif en particulier de conserver une certaine élasticité au mastic, de manière à faciliter la manipulation de la membrane d'étanchéité contenant ce mastic, tout en maintenant, après application, sa résistance à la fissuration (lézarde, cassure, fissure, craquelure, coupure, etc.)

Toute la difficulté technique est donc de conférer au mastic bitumineux cette propriété de rigidité à e.g. 40-60°C, sans augmenter exagérément sa viscosité à chaud. Il faudrait en effet que le mastic bitumineux puisse être suffisamment ramolli, de manière à pouvoir être étalé et/ou à coller la membrane sur la surface à revêtir, sans que cela ne nécessite un chauffage trop intense, qui risquerait de détériorer les qualités intrinsèques de la membrane d'étanchéité.

La problématique exposée ci-avant pour les membranes d'étanchéité vaut également pour d'autres types de revêtements et notamment les revêtements intérieurs tels que les revêtements de sols de type moquettes en bandes ou en dalles.

En effet, il serait également souhaitable de disposer de revêtements intérieurs comprenant du mastic bitumineux présentant une certaine rigidité, e.g. à 40-60°C, sans augmentation excessive de la viscosité à des températures plus élevées. Concrètement en effet, dans le cadre de stockage (conditionnement, empilement, augmentation de température) de revêtements intérieurs, par exemple dalles de moquettes, les mastics bitumineux peuvent fluer.

Cette rigidité permettrait de garantir aux revêtements intérieurs en question une stabilité dimensionnelle liée aux élévations de température et une stabilité dimensionnelle liée à l'application d'une charge statique ou dynamique; ce qui aurait pour effet de minimiser voire éliminer le fluage du mastic bitumineux.

Dans ce contexte, l'un des objectifs essentiels de la présente invention est de proposer un mastic bitumineux :
(i) résistant à la déformation sous charge dynamique et également statique dans les conditions de température ambiante régnant lors de la pose et lors de période d'élévation de températures, notamment lorsque celles-ci deviennent supérieures à 40°C,
(ii) et présentant en outre des propriétés de tenue à froid et de stabilité dimensionnelle en cas de variations thermiques et de charges importantes.

Un autre objectif essentiel de la présente invention est de proposer un revêtement comprenant du mastic bitumineux qui lui confère:
(i') une résistance à la déformation sous charge dynamique et également statique, dans les conditions de température ambiante régnant lors de la pose et lors de périodes d'élévation de températures, notamment lorsque celles-ci deviennent supérieures à 40°C,
(ii') et des propriétés de tenue à froid et de stabilité dimensionnelle en cas de variations thermiques et de charges importantes.

Ces objectifs sont atteints par l'invention qui concerne tout d'abord l'utilisation d'au moins une résine thermoplastique:
° sélectionnée parmi les mélanges de (co)polymères thermoplastiques, comprenant une majorité d'unités styréne-indène (obtenus notamment par polymérisation de monomères styréniques et de monomères indèniques),
° de température de transition vitreuse Tg (en °C) telle que:
   40 ≤ Tg ≤ 150
   de préférence 80 ≤ Tg ≤ 140
° et de pénétrabilité P (en 1/10 de mm) à 50°C telle que:
   P ≤ 10
   de préférence P ≤ 5
   à titre d'agent structurant A d'un mastic bitumineux comprenant au moins un bitume B, au moins une charge C et au moins un polymère D réticulable ou non réticulable.

Le mastic bitumineux issu de l'utilisation selon l'invention présente notamment les avantages additionnels suivants:
- compatibilité des composants le constituant; notamment compatibilité entre l'additif A avec le polymère D et le bitume B choisi,
- pas de mauvaises odeurs à chaud,
- préparation et utilisation aisées, toxicité réduite, faible coût de revient et performance améliorées en termes de propriétés mécaniques et physiques finales pour les revêtements obtenus à partir dudit mastic,
- fiabilité dans le temps compatible avec la garantie décennale en cours dans le domaine du bâtiment.

Avantageusement, l'agent structurant A a une viscosité η (en mPa.s) à 150°C telle que 100 ≤ η ≤ 70000, et de préférence 600 ≤ η ≤ 45000. Cette viscosité η est mesurée en cône plan, à 150°C, sous un taux de cisaillement de 200 s⁻¹.

Il est à noter que l'agent structurant A selon l'invention est parfaitement stable et compatible avec le bitume B, la charge C, ainsi que le polymère D.

Comme indiqué ci-dessus, la Tg des agents A est l'un des paramètres importants de l'invention. En effet, pour que ce mastic bitumineux soit aisément utilisable dans des applications industrielles, il est utile que la Tg de A soit inférieure ou égale à la température de ramollissement du mastic bitumineux, lorsqu'il est fixé sur des supports fibreux ou non-fibreux, sachant que ces derniers ne doivent pas être endommagés lors de cette opération.

Suivant une modalité préférée de l'invention, la résine structurante A est sélectionnée parmi les (co)polymères obtenus par polymérisation d'environ 50% de monomères styréniques et d'environ 50% de monomères indéniques.

Suivant une autre modalité préférée de l'invention, l'agent structurant A a un point de ramollissement PR_{A} (ISO 4625) en °C, tel que 70 ≤ PR_{A} ≤ 170, et de préférence 80 ≤ PR_{A} ≤ 140.

Conformément à l'invention, l'agent structurant A est un additif qui est présent en faible quantité dans le mastic bitumineux et qui confère ainsi à ce dernier au moins une partie de ces propriétés avantageuses et originales. En particulier, A est présent à raison de (en % en poids par rapport à la masse totale du mastic):
■ [A] < 10,
■ de préférence 0,1 % ≤ [A] ≤ 6,
■ et plus préférentiellement encore 0,1 ≤ [A]≤ 4.

Parmi les résines disponibles utilisables comme agents structurants A on peut citer à titre d'exemples certaines des résines commercialisées par la société Total Cray Valley, sous la marque déposée Norsolène®. Il s'agit notamment des résines Norsolène® de type S85, S95, S105, S115, S125, S135, 9090, 9100, 9110 et leurs équivalents à niveau d'odeurs à chaud réduit.

Dans le cadre de l'invention, le bitume B peut être constitué par un seul type de bitume ou par un mélange de bitumes, tels que par exemple ceux que l'on utilise en général dans la préparation des compositions bitume/polymère. Le bitume B est choisi parmi les bitumes qui possèdent une pénétrabilité, suivant la norme EN 1426, comprise entre 5 et 500.

Une autre caractéristique avantageuse du bitume B est d'avoir un point de ramollissement TBA (Température Bille-Anneau, EN 1427) en °C , tel que 35 ≤ TBA ≤ 80.

Ces bitumes peuvent être des bitumes soufflés ou semi-soufflés, voire même certaines coupes pétrolières ou des mélanges de bitumes et de distillats sous vide (distillation directe ou de distillation sous pression réduite).

Le bitume B peut être un bitume naturel ou un bitume de l'industrie pétrolière, mais aussi ce qu'on appelle un bitume clair, c'est-à-dire un bitume quasiment sans d'asphaltènes.

Pour les revêtements extérieurs, en particulier les membranes d'étanchéité, le bitume B du mastic bitumineux selon l'invention, est sélectionné parmi ceux ayant une pénétrabilité, suivant la norme EN 1426, comprise entre 140 et 220.

Pour les revêtements intérieurs, en particulier les dalles de moquettes, le bitume B du mastic bitumineux selon l'invention, est sélectionné parmi ceux ayant une pénétrabilité, suivant la norme EN 1426, comprise entre 10 et 50.

La charge C est généralement choisie parmi les charges minérales particulaires qui comprennent des fines, à savoir des particules de dimensions inférieures 80 µm, et éventuellement des agrégats, c'est-à-dire des particules de dimensions comprises entre 80 et 2000 µm, et éventuellement des gravillons, c'est-à-dire des particules de dimensions supérieures à 2000 µm, le sable, et/ou le carbonate de calcium et/ou l'alumine étant particulièrement préférés.

Cette charge C peut aussi être constituée (au moins en partie) par des charges fibreuses, lesquelles sont avantageusement choisies dans le groupe comprenant les fibres minérales -de préférence les fibres de verre-, les fibres de carbone, les fibres synthétiques -de préférence les fibres de polyesters, de polyoléfines ou de polyamides- et leurs mélanges.

De manière plus préférée, la charge C a une granulométrie comprise entre 0,001 et 300 µm, de préférence entre 1 et 250 µm. De manière encore plus préférée, la charge C a une surface BET inférieure à 100 m²/g.

Le polymère D que l'on utilise en général pour préparer le mastic bitumineux est présent en une quantité comprise entre 0,5 et 25 % rapportée au poids de la formulation de mastic.

Ce polymère D peut être choisi généralement parmi de nombreux type de polymères, réticulables ou non-réticulables.

Il peut notament être choisi à base d'au moins un type de copolymère choisi parmi :
(i) les copolymères statistiques ou séquencés de styrène avec un diène conjugué, de préférence choisi dans le groupe comprenant: butadiène, isoprène, chloroprène, butadiène carboxylé et isoprène carboxylé,
(ii) le groupe d'élastomères comprenant: le polyisoprène, le polybutadiène, le caoutchouc butyle,
(iii) et les terpolymères éthylène/ propylène / diène.

De préférence, ce polymère D consiste en un ou plusieurs copolymères choisis parmi les copolymères séquencés, notamment di- ou triséquencés, avec ou sans charnière statistique, de styrène et de butadiène, de styrène et d'isoprène, de styrène et de chloroprène, de styrène et de butadiène carboxylée, ou encore de styrène et d'isoprène carboxylée.

Plus particulièrement, le polymère D est réticulé au sein de la composition de mastic à l'aide d'un agent de couplage et est choisi avantageusement parmi les copolymères de styrène et de diène conjugué avec une teneur pondérale en styrène allant de 5 % à 50 %.

A noter que les copolymères D statistiques ou séquencés de styrène et d'un diène se dissolvent très facilement dans le bitume B et confèrent à ce dernier d'excellentes propriétés mécaniques et dynamiques et notamment de très bonnes propriétés de viscoélasticité.

La masse moléculaire moyenne en poids du copolymère de styrène et de diène conjugué, et plus généralement celle des copolymères D mentionnés ci-avant, peut être comprise, par exemple, entre 10 000 et 600 000 Daltons et se situe de préférence entre 30 000 et 400 000 Daltons.

A titre d'exemples de polymères D pour bitume, on peut citer les élastomères tels que les copolymères à blocs du styrène et du butadiène SB, les copolymères à blocs styrène-butadiène-styrène SBS, les copolymères à blocs styrène- butadiène-styrène en étoile SBS*, les copolymères styrène-isoprène-styrène SIS, les copolymères polyéthylène-acétate de vinyle EVA, les copolymères polyéthylène-acétate de butyle EBA, les polyoléfines telles que les polyéthylènes PE et PEHD, le polypropylène PP, les copolymères du styrène, éthylène, butylène et styrène SEBS, les copolymères styrène-butadiène-rubber SBR, etc.

Dans le cas où le polymère D de l'invention est choisi parmi les polymères D réticulables, on emploie un agent de couplage (ou de réticulation) Dc pour assurer et/ou faciliter la réticulation.

Cet agent de couplage Dc peut être de nature très variée et est choisi en fonction du(es) type(s) de polymère(s) D contenu(s) dans le mastic bitumineux selon l'invention.

En général, l'agent Dc est choisi dans le groupe des accélérateurs de vulcanisation donneurs de soufre et/ou des accélérateurs de vulcanisation non donneurs de soufre. Les premiers sont préférés, et en particulier parmi eux, ceux constitués par le soufre élémentaire, les polysulfures d'hydrocarbyle et les mélanges de tels produits entre eux. Dans ce cas, l'agent de couplage est présent en quantité efficace pour fournir du soufre libre représentant entre 0,1 et 20 % du poids du polymère réticulable D.

L'agent de couplage Dc pourra notamment être au moins l'un des agents de couplage décrits dans EP-739 386-B1, EP-799 280-B1 et EP-837 910-B1.

Le soufre élémentaire susceptible d'être utilisé pour constituer, en partie ou en totalité, l'agent de couplage Dc est avantageusement du soufre en fleur et de préférence du soufre cristallisé sous la forme orthorhombique et connu sous le nom de soufre alpha.

Les polysulfures d'hydrocarbyle susceptibles d'être utilisés pour former au moins une partie de l'agent de couplage Dc répondent à la formule générale :

R¹-(S)ᵥ-(R²-(S)ᵥ-)_{w}-R³

dans laquelle R¹ et R² désignent chacun un radical hydrocarboné monovalent, saturé ou insaturé, en C₁ à C₂₀ ou sont reliés entre eux pour constituer un radical hydrocarboné divalent en C₂ à C₂₀, saturé ou insaturé, formant un cycle avec les autres groupements d'atomes associés dans la formule, R³ est un radical hydrocarboné divalent, saturé ou insaturé, en C₁ à C₂₀, les -(S)v- représentent des groupements divalents formés chacun de v atomes de soufre, les v désignant des nombres entiers allant de 1 à 6 avec au moins l'un des v égal ou supérieur à 2, et w représente un nombre entier prenant les valeurs de zéro à 10.

D'autres polysulfures utilisables sont par exemple tels que les trisulfures de diphényle, trisulfures de dibenzyle, tétrasulfures de diphényle, tétrasulfures d'orthotolyle, tétrasulfures de dibenzyle, pentasulfures de dibenzyle, pentasulfures de diallyle, et les tétraméthyltétrathianes.

Comme autres exemples d'accélérateurs de vulcanisation donneurs de soufre on peut encore citer les les polysulfures de thiurame, les disulfures d'alkylphénols et les disulfures tels que disulfure de morpholine et N,N'-disulfure de caprolactame.

Les accélérateurs de vulcanisation non donneurs de soufre peuvent être des composés soufrés choisis notamment parmi le mercaptobenzothiazole et ses dérivés, le diphényl-1,3 guanidine, la diorthotolylguanidine, l'oxyde de zinc, les monosulfures de thiurame, et les dithiocarbamates de formule générale [(R⁴ R⁴)N-(C=S)-S]b- Y dans laquelle les R⁴ sont par exemple des radicaux hydrocabonés en C1-C12, Y représente un métal et b désigne la valence de Y.

Selon un autre de ses aspects, l'invention concerne un mastic bitumineux caractérisé en ce qu'il comprend:
- au moins un agent structurant A' dénué de pégosité à 25°C et choisi parmi les résines thermoplastiques de température de transition vitreuse Tg (en °C) telles que Tg ≥ 40, de préférence Tg ≥ 60 et mieux encore Tg ≥ 80, et telles que Tg ≤ 150, voire Tg ≤ 140,
- au moins un bitume B,
- au moins une charge C,
- et au moins un polymère D réticulable ou non réticulable.

Ce mastic nouveau selon l'invention a notamment pour caractéristique avantageuse d'être dénué de pégosité à une température inférieure ou égale à 50°C. En d'autres termes, ce mastic est non tackifiant, non collant à une température inférieure ou égale à 50°C.

Avantageusement, A' a une pénétrabilité P (en 1/10 mm) à 50°C telle que P ≤ 10, et de préférence P ≤ 5.

Cette agent structurant A' est généralement sélectionné :
o parmi les mélanges de (co)polymères thermoplastiques, obtenus par polymérisation d'hydrocarbures insaturés principalement aromatiques, c'est-à-dire parmi les mélanges de résines aromatiques;
o de préférence parmi les mélanges de (co)polymères thermoplastiques, obtenus par polymérisation notamment de monomères styréniques et de monomères indéniques, et plus préférentiellement encore de 50% environ de monomères styréniques et de 50% environ de monomères indéniques.

De préférence, A' est de définition identique à celle donnée pour l'agent structurant A défini ci-avant dans le cadre de la description de l'utilisation selon l'invention.

Selon encore un autre de ses aspects, l'invention vise un procédé de préparation d'un mastic bitumineux mis en oeuvre dans l'utilisation telle que définie supra ou du mastic bitumineux tel que défini supra.

Ce procédé est caractérisé en ce qu'il consiste essentiellement à mettre en contact, en opérant à une température comprise entre 100°C et 230°C et sous agitation pendant une durée d'au moins 10 minutes, le bitume B et/ou le prémélange bitume B / polymère D, l'agent structurant A et la charge C.

A titre d'exemple quantitatif (en % en poids par rapport à la masse totale du mastic) de mastic bitumineux selon l'invention, on peut citer les compositions suivantes:
- [A] < 10, de préférence 0,1 ≤ [A] ≤ 6,0 et plus
   préférentiellement encore 0,1 ≤ [A] ≤ 4,0
- 10 à 80 de [B]
- 10 à 80 de [C]
- 0,5 à 25 de [D].

Pour des revêtements extérieurs (chapes) : [B] ≥ 50 et [C] ≤ 40, tandis que pour des revêtements intérieurs (dalles) : [B] ≤ 40 et [C] ≥ 60.

L'invention concerne également l'utilisation du mastic bitumineux tel que défini supra, pour fixation sur des supports.

Les techniques de fixations sur supports sont connues et bien maîtrisées par l'homme de l'art. Il peut s'agir par exemple d'enduction, d'imprégnation, d'aspersion, etc.

L'invention concerne également les revêtements réalisés à partir des mastics bitumineux selon l'invention. Ces revêtements peuvent être choisis parmi les revêtements intérieurs ou extérieurs, employés pour l'étanchéité et/ou l'amortissement de vibrations et/ou l'isolation thermique et/ou phonique et/ou la protection contre le feu (ignifugation).

Plus précisément, ces revêtements peuvent être choisis parmi les revêtements intérieurs de bâtiments tels que les revêtements de sol (tapis, moquettes sous formes de bandes ou de dalles, chapes intérieures, parquets-par exemple flottants-), et les revêtements extérieurs de bâtiments telles que les membranes d'étanchéité (ou chapes) pour toits, terrasses, façades et murs.

L'invention sera mieux comprise et ses avantages illustrées à la lecture des exemples qui suivent.

### EXEMPLES :

### I. Tests

Les caractéristiques rhéologiques et mécaniques des bitumes ou des compositions de mastics bitumineux sont exprimés selon les références et tests suivants :
- Pénétrabilité : exprimée en 1/10 mm suivant la norme NF EN 1426.
- Point de ramollissement bille et anneau : exprimé en °C suivant la norme NF EN 1427.
- Résistance au fluage à 70°C. La tenue au fluage est mesurée sur des languettes de bitume disposées sur une plaque métallique préalablement dégraissée. La plaque est positionnée verticalement dans une étuve à 70°C pendant 24 heures. Après cette étape, la tenue au fluage est exprimée par l'élongation de la languette.
- Viscosité Brookfield : mesurée en mPa.s, à 150°C, sous un cisaillement de 60s⁻¹ (viscosimètre Brookfield CAP 2000+).

### II. Composition des mastics

Les produits mis en oeuvre dans les exemples sont :
- Agent structurant A : résine thermoplastique à motifs styrène-indène de Tg égale à 100°C et P à 50°C égale à 1.
- Mélange Bitume B - polymère D: Styrelf ® 1320, commercialisé par TOTAL FRANCE.
- Charge C : carbonate de calcium, de granulométrie moyenne d'environ 20 µm.

Les caractéristiques principales de ces 3 constituants sont reprises dans le tableau 1 ci-après. Les pourcentages sont exprimés en poids par rapport à la masse totale du mastic.

**TABLEAU 1**

| | Bitume B - polymère D | Agent structurant A | Charge C |
|---|---|---|---|
| Pénétrabilité à 25°C (1/10 mm) | 20 à 30 | | |
| Point de ramollissement (°C) | > 65 | 78 à 160 | |
| Granulométrie (µm) | | | 5 à 200 |

### Composition 1 selon l'invention :

Cette préparation est réalisée à 180°C, dans un réacteur sous agitation dans lequel 22,5% d'un bitume B- polymère D, et 67,5% de charge C sont introduits dans le réacteur.

Après agitation pendant environ 1 heure, 10% d'agent structurant A sont ajoutés. L'agitation est ensuite encore maintenue pendant 1 heure.

Le mélange obtenu a un aspect homogène et présente une pénétrabilité à 25°C de 0,1 mm.

### Composition 2 selon l'invention :

Cette préparation est réalisée à 180°C, dans un réacteur sous agitation dans lequel 22,5% d'un bitume B- polymère D sont introduits.

L'agent structurant A, à raison de 2,5%, est ensuite introduit dans le réacteur.

Après agitation pendant environ 30 minutes, 75% de charge C de granulométrie moyenne 20 µm sont ajoutés. L L'agitation est ensuite encore maintenue pendant 1 heure.

Le mélange obtenu a un aspect homogène et présente une pénétrabilité à 25°C de 0,2 mm.

### III. Résultats

Les résultats des essais réalisés sur chacun des produits cités dans les exemples précédents sont présentés dans le tableau 2 ci-après.

**TABLEAU 2**

| | Bitume- polymère | Mélange référence | Exemple 1 | Exemple 2 |
|---|---|---|---|---|
| Bitume B-polymère D | 100% | 25% | 22,5% | 22,5% |
| Agent structurant A | | | 10% | 2,5% |
| Charge C | | 75% | 67,5% | 75% |
| Pénétrabilité à 25°C | 23 | 6 | 1 | 2 |
| Pénétrabilité à 50°C | | 47 | 8 | 26 |
| TBA(°C) | 68 | 97 | 102,8 | 100 |
| Fluage à 70°C* | | +++ | - | + |
| Viscosité Brookfield | | 67500 | - | 66000 |

| | | | | |
|---|---|---|---|---|
| * le fluage est gradué de 0 (absence de fluage) à +++ (fluage important). | | | | |

## Revendications

1. Utilisation d'au moins une résine thermoplastique:
° sélectionnée parmi les mélanges de (co)polymères thermoplastiques, comprenant une majorité d'unités styréne-indéne,
° de température de transition vitreuse Tg (en °C) tel que:
40 ≤ Tg ≤ 150
de préférence 80 ≤ Tg ≤ 140,
° et de pénétrabilité P (en 1/10 de mm) à 50°C telle que:
P ≤ 10
de préférence P ≤ 5,
à titre d'agent structurant A d'un mastic bitumineux comprenant au moins un bitume B, au moins une charge C et au moins un polymère D réticulable ou non réticulable.

2. Utilisation selon la revendication 1, **caractérisée en ce que** l'agent structurant A a une viscosité η (en mPa.s) à 150°C telle que:
100 ≤ η ≤ 70000
de préférence 600 ≤ η ≤ 45000

3. Utilisation selon la revendication 1 ou 2, **caractérisée en ce que** l'agent structurant A est sélectionné parmi les (co)polymères obtenus par polymérisation d'environ 50% de monomères styréniques et d'environ 50% de monomères indéniques.

4. Utilisation selon la revendication 1 ou 2, **caractérisée en ce que** l'agent structurant A a un point de ramollissement PR_{A} (ISO 4625) en °C, tel que 70 ≤ PR_{A} ≤ 170, et de préférence 80 ≤ PR_{A} ≤ 140.

5. Utilisation selon l'une quelconque des revendications 1 à 4, **caractérisée en ce que** l'agent structurant [A] est présent à raison de en % en poids par rapport à la masse totale du mastic:
■ [A] < 10
■ de préférence 0,1 ≤ [A] ≤ 6,0
■ et plus préférentiellement encore 0,1 ≤ [A] ≤ 4,0

6. Utilisation selon l'une quelconque des revendications 1 à 5, **caractérisée en ce que** le bitume B a un point de ramollissement TBA tel que 35 ≤ TBA ≤ 80.

7. Utilisation selon l'une quelconque des revendications 1 à 6, **caractérisée en ce que** le polymère D consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylée, ou encore de styrène et d'isoprène carboxylée.

8. Mastic bitumineux **caractérisé en ce qu'**il comprend:
- au moins un agent structurant A' dénué de pégosité à 25°C et choisi parmi les résines thermoplastiques de température de transition vitreuse Tg (en °C) tel que 60≤ Tg ≤ 150, et de préférence 80 ≤ Tg ≤ 150;
- au moins un bitume B;
- au moins une charge C;
- au moins un polymère D réticulable ou non réticulable.

9. Mastic bitumineux selon la revendication 8, **caractérisé en ce que** l'agent structurant A' est sélectionné :
o parmi les mélanges de (co)polymères thermoplastiques, obtenus par polymérisation cationique d'hydrocarbures insaturés principalement aromatiques, c'est-à-dire parmi les mélanges de résines aromatiques;
o de préférence parmi les mélanges de (co)polymères thermoplastiques, obtenus par polymérisation cationique notamment de monomères styréniques et de monomères indéniques, et plus préférentiellement encore de 50% environ de monomères styréniques et de 50% environ de monomères indéniques.

10. Utilisation du mastic bitumineux tel que défini dans l'utilisation selon l'une quelconque des revendications 1 à 7, du mastic bitumineux selon l'une quelconque des revendications 8 ou 9, pour application sur des supports.

11. Revêtement **caractérisé en ce qu'**il comprend un support comportant du mastic bitumineux tel que défini dans l'utilisation selon l'une quelconque des revendications 1 à 7, ou du mastic bitumineux selon l'une quelconque des revendications 8 ou 9.

12. Revêtement selon la revendication 11, **caractérisé en ce qu'**il est employé pour l'étanchéité et/ou l'amortissement de vibrations et/ou l'isolation thermique et/ou phonique et/ou la protection contre le feu.

## Claims

1. The use of at least one thermoplastic resin:
• chosen from blends of thermoplastic (co)polymers, comprising a majority of styrene-indene units;
• having a glass transition temperature Tg (in °C) such that:
40 ≤ T_{g} ≤ 150
preferably 80 ≤ T_{g}≤ 140;
• and having a penetrability P (in 1/10 of mm) at 50°C such that:
P ≤ 10
preferably P ≤ 5,
as structuring agent A of a bituminous mastic comprising at least one bitumen B, at least one filler C and at least one polymer D that may or may not be crosslinkable.

2. The use as claimed in claim 1, **characterized in that** the structuring agent A has a viscosity η (in mPa.s) at 150°C such that:
100 ≤ η ≤ 70 000;
preferably 600 ≤ η ≤ 45 000.

3. The use as claimed in claim 1 or 2, **characterized in that** the structuring agent A is chosen from the (co)polymers obtained by polymerization of around 50% of styrene monomers and around 50% of indene monomers.

4. The use as claimed in claim 1 or 2, **characterized in that** the structuring agent A has a softening point PR_{A} (ISO 4625), in °C, such that 70 ≤ PR_{A} ≤ 170, and preferably 80 ≤ PR_{A} ≤ 140.

5. The use as claimed in any one of claims 1 to 4, **characterized in that** the structuring agent [A] is present in an amount of, in % by weight relative to the total weight of the mastic:
■ [A] < 10;
■ preferably, 0.1 ≤ [A] ≤ 6.0; and
■ more preferably still, 0.1 ≤ [A] ≤ 4.0.

6. The use as claimed in any one of claims 1 to 5, **characterized in that** the bitumen B has a softening point RBT such that 35 ≤ RBT ≤ 80.

7. The use as claimed in any one of claims 1 to 6, **characterized in that** the polymer D consists of one or more copolymers chosen from styrene/butadiene, styrene/isoprene, styrene/chloroprene, carboxylated styrene/butadiene or else carboxylated styrene/isoprene block copolymers with or without random linkage.

8. A bituminous mastic, **characterized in that** it comprises:
- at least one structuring agent A' that is tack free at 25°C and chosen from thermoplastic resins having a glass transition temperature T_{g} (in °C) such that 60 ≤ T_{g} ≤ 150, and preferably 80 ≤ T_{g} ≤ 150;
- at least one bitumen B;
- at least one filler C; and
- at least one polymer D that may or may not be crosslinkable.

9. The bituminous mastic as claimed in claim 8, **characterized in that** the structuring agent A' is chosen:
• from blends of thermoplastic (co)polymers, obtained by cationic polymerization of mainly aromatic unsaturated hydrocarbons, that is to say from blends of aromatic resins; and
• preferably from blends of thermoplastic (co)polymers, obtained by cationic polymerization in particular of styrene monomers and indene monomers, and more preferably still of around 50% of styrene monomers and of around 50% of indene monomers.

10. The use of the bituminous mastic as defined in the use as claimed in any one of claims 1 to 7, or the bituminous mastic as claimed in either one of claims 8 and 9, for application onto supports.

11. A coating, **characterized in that** it comprises a support that is equipped with the bituminous mastic as defined in the use as claimed in any one of claims 1 to 7, or the bituminous mastic as claimed in either one of claims 8 and 9.

12. Coating as claimed in claim 11, **characterized in that** it is used for sealing and/or vibration damping and/or thermal insulation and/or sound insulation and/or fire protection.

## Patentansprüche

1. Verwendung mindestens eines thermoplastischen Harzes:
- ausgewählt aus Mischungen von thermoplastischen (Co)polymeren, umfassend als Hauptbestandteil Styrol-Inden-Einheiten,
- mit einer Glasübergangstemperatur Tg (in °C) so wie:
40 ≤ Tg ≤ 150,
bevorzugt 80 ≤ Tg ≤ 140,
- und mit einer Durchdringbarkeit P (in 1/10 mm) bei 50°C so wie:
P ≤ 10,
bevorzugt P ≤ 5,
als Strukturmittel A eines bituminösen Mastix, der mindestens ein Bitumen B, mindestens einen Füllstoff C und mindestens ein vernetzbares oder nicht-vernetzbares Polymer D umfasst.

2. Verwendung gemäß Anspruch 1, **dadurch gekennzeichnet, dass** das Strukturmittel A eine Viskosität η (in mPa x s) bei 150°C so wie:
100 ≤ η ≤ 70.000,
bevorzugt 600 ≤ η ≤ 45.000,
aufweist.

3. Verwendung gemäß Anspruch 1 oder 2, **dadurch gekennzeichnet, dass** das Strukturmittel A aus (Co)polymeren ausgewählt ist, die durch Polymerisation von ca. 50 % Styrolmonomeren und ca. 50 % Indenmonomeren erhalten werden.

4. Verwendung gemäß Anspruch 1 oder 2, **dadurch gekennzeichnet, dass** das Strukturmittel A einen Erweichungspunkt PR_{A} (ISO 4625) in °C so wie 70 ≤ PR_{A} ≤ 170 und bevorzugt so wie 80 ≤ PR_{A} ≤ 140 aufweist.

5. Verwendung gemäß einem der Ansprüche 1 bis 4, **dadurch gekennzeichnet, dass** das Strukturmittel [A], bezogen auf die Gesamtmasse des Mastix, in Gew.-% so wie:
- [A] < 10,
- bevorzugt 0,1 ≤ [A] ≤ 6,0,
- ganz besonders bevorzugt 0,1 ≤ [A] ≤ 4,0,
vorhanden ist.

6. Verwendung gemäß einem der Ansprüche 1 bis 5, **dadurch gekennzeichnet, dass** das Bitumen B einen Erweichungspunkt TBA von 35 ≤ TBA ≤ 80 aufweist.

7. Verwendung gemäß einem der Ansprüche 1 bis 6, **dadurch gekennzeichnet, dass** das Polymer D aus einem oder mehreren Copolymeren besteht, ausgewählt aus mit oder ohne statistische Verbindungsstellen aufgebauten BlockCopolymeren aus Styrol und Butadien, Styrol und Isopren, Styrol und Chloropren, Styrol und carboxyliertem Butadien oder auch aus Styrol und carboxyliertem Isopren.

8. Bituminöser Mastix, **dadurch gekennzeichnet, dass** er umfasst:
- mindestens ein Strukturmittel A' ohne Klebrigkeit bei 25°C, ausgewählt aus thermoplastischen Harzen mit einer Glasübergangstemperatur Tg (in °C) so wie 60 ≤ Tg ≤ 150 und bevorzugt so wie 80 ≤ Tg ≤ 150;
- mindestens ein Bitumen B;
- mindestens einen Füllstoff C;
- mindestens ein vernetzbares oder nicht-vernetzbares Polymer D.

9. Bituminöser Mastix gemäß Anspruch 8, **dadurch gekennzeichnet, dass** das Strukturmittel A' ausgewählt ist aus:
- Mischungen von thermoplastischen (Co)polymeren, erhalten durch kationische Polymerisation ungesättigter grundsätzlich aromatischer Kohlenwasserstoffe, d.h. aus Mischungen aromatischer Harze;
- bevorzugt aus Mischungen von thermoplastischen (Co)polymeren, erhalten durch kationische Polymerisation von insbesondere Styrol- und Indenmonomeren und noch bevorzugter von ca. 50 % Styrolmonomeren und ca. 50 % Indenmonomeren.

10. Verwendung des in der Verwendung gemäß einem der Ansprüche 1 bis 7 oder gemäß einem der Ansprüche 8 oder 9 definierten bituminösen Mastix zum Überziehen von Träger.

11. Überzug, **dadurch gekennzeichnet, dass** er eine Trägerunterlage umfasst, die den in der Verwendung gemäß einem der Ansprüche 1 bis 7 oder gemäß einem der Ansprüche 8 oder 9 definierten bituminösen Mastix aufweist.

12. Überzug gemäß Anspruch 11, **dadurch gekennzeichnet, dass** er für die Undurchlässigkeit und/oder Dämpfung von Schwingungen und/oder zur Wärme- und/oder Schallisolation und/oder zum Feuerschutz angewandt wird.
